# EUROPÄISCHE PATENTANMELDUNG

(11) **EP 3 544 112 A1**
(43) Veröffentlichungstag der Anmeldung: **25.09.2019**
(21) Anmeldenummer: 19160183.0
(22) Anmeldetag: 01.03.2019
(51) Int. Cl.: H01M 10/42, B60L 58/10, B66F 9/24, H01M 10/052

(54) **VERFAHREN UND STEUERUNGSSYSTEM ZUR STEUERUNG EINES BATTERIESYSTEMS SOWIE MIT DEM STEUERUNGSSYSTEM AUSGESTATTETES BATTERIE-ELEKTRISCH BETRIEBENES FAHRZEUG, INSBESONDERE FLURFÖRDERZEUG**

(30) Priorität: 19.03.2018 DE 102018106369
(71) Anmelder: Linde Material Handling GmbH, 63743 Aschaffenburg (DE)
(72) Erfinder: Kowalski, Thomas, 63776 Mömbris (DE); Sippel, Heiko, 63741 Aschaffenburg (DE); Häcker, Berthold, 63864 Glattbach (DE); Wilhelm, Dr., Jörg, 63743 Aschaffenburg (DE)
(74) Vertreter: Patentship Patentanwaltsgesellschaft mbH

(57) **Zusammenfassung**

Die Erfindung betrifft ein Verfahren zum Steuern eines mit mindestens einer Batterie (2) und mindestens einer Batterieelektronik (4) ausgestatteten Batteriesystems (1) mit mindestens einem Leistungsanschluss (11a), über den mindestens ein elektrischer Verbraucher mit elektrischer Energie aus der Batterie (2) versorgt werden kann und/oder über den die Batterie (2) mittels einer Ladeeinrichtung geladen werden kann, sowie mit mindestens einem Kommunikationsanschluss (10a), über den eine Kommunikationsverbindung (13) zwischen der Batterieelektronik (4) und einer außerhalb des Batteriesystems (1) vorgesehenen Steuerungseinrichtung hergestellt werden kann, wobei die Batterieelektronik (4) mit elektrischer Energie aus der Batterie (2) versorgt wird, und bei vorgegebenen Betriebszuständen die Energieversorgung der Batterieelektronik (4) getrennt und die Batterieelektronik (4) deaktiviert wird, wodurch das Batteriesystem (1) ausgeschaltet wird, sowie ein Steuerungssystem zur Durchführung des Verfahrens und ein elektrisch betriebenes Fahrzeug, insbesondere Flurförderzeug, mit einem Batteriesystem (1) und einer Fahrzeugsteuerung. Es wird vorgeschlagen, dass zum Einschalten des Batteriesystems (1) die Batterieelektronik (4) über den Kommunikationsanschluss (10a) mindestens solange mit elektrischer Energie versorgt wird, bis die Batterieelektronik (4) aktiviert ist.

## Beschreibung

Die Erfindung betrifft ein Verfahren zum Steuern eines mit mindestens einer Batterie und mindestens einer Batterieelektronik ausgestatteten Batteriesystems mit mindestens einem Leistungsanschluss, über den mindestens ein elektrischer Verbraucher mit elektrischer Energie aus der Batterie versorgt werden kann und/oder über den die Batterie mittels einer Ladeeinrichtung geladen werden kann, sowie mit mindestens einem Kommunikationsanschluss, über den eine Kommunikationsverbindung zwischen der Batterieelektronik und einer außerhalb des Batteriesystems vorgesehenen Steuerungseinrichtung hergestellt werden kann, wobei die Batterieelektronik mit elektrischer Energie aus der Batterie versorgt wird, und bei vorgegebenen Betriebszuständen die Energieversorgung der Batterieelektronik getrennt und die Batterieelektronik deaktiviert wird, wodurch das Batteriesystem ausgeschaltet wird, sowie ein Steuerungssystem zur Durchführung des Verfahrens und ein elektrisch betriebenes Fahrzeug, insbesondere Flurförderzeug, mit einem Batteriesystem und einer Fahrzeugsteuerung.

Moderne Batteriesysteme verwenden meist Lithium-Ionen-Batterien bzw. Lithium-Ionen-Akkumulatoren (auch Lithium-Ionen-Sekundärbatterien genannt). Darunter versteht man Akkumulatoren auf der Basis von Lithium-Verbindungen in allen drei Phasen der elektrochemischen Zelle. Die reaktiven Materialien sowohl in der negativen als auch in der positiven Elektrode sowie der Elektrolyt enthalten Lithiumionen. Lithium-Ionen-Akkumulatoren weisen im Vergleich zu anderen Akkumulatortypen eine hohe spezifische Energie auf, erfordern jedoch in den meisten Anwendungen elektronische Schutzschaltungen, da sie sowohl auf Tiefentladung als auch Überladung empfindlich reagieren.

Bei Batteriesystemen neuester Technologie sind typischerweise eine Vielzahl von Einzelbatteriezellen in Serien- und/oder Parallelverbund als Batterie verschaltet. Solche Batteriesysteme verfügen in der Regel auch über eine Elektronik (so genannte Symmetrierungsschaltungen), die durch so genanntes "Cell-Balancing" den Ladezustand aller Batteriezellen in dem Batteriesystem aneinander angleicht. Insbesondere muss die Ladung beendet bzw. zumindest der Ladestrom reduziert werden, wenn die erste Zelle die Maximalspannung überschreitet. Entsprechend muss die Entladung beendet werden, wenn die erste Zelle die Minimalspannung unterschreitet.

Weiterhin sind für die Sicherheitsanforderungen bezüglich dieser Batteriesysteme in Fahrzeugen, aber auch bei stationären Anwendungen, häufig weitere elektronische Ein- und/oder Anbausysteme notwendig.

Diese eingebetteten und/oder ausgelagerten Elektroniken gattungsgemäßer und erfindungsgemäßer Batteriesysteme werden im Folgenden unter dem Begriff Batterieelektronik zusammengefasst. Diese Batterieelektronik benötigt je nach Betriebsmodus eine geringe aber notwendige Energie zur Versorgung. Die Energie wird entweder aus einer Sekundärenergiequelle, gespeist von der Primärenergiequelle, oder direkt aus der Primärenergiequelle, also der Batterie, entnommen. Hierdurch entstehen Entladungsprozesse, die zur Schädigung des Batteriesystems aufgrund von Tiefentladung führen, sofern die Batterieelektronik nicht gesteuert getrennt wird.

Die Abschaltung der Batterieelektronik wird typischerweise mittels gemessenen Spannungsniveaus in der Batterie oder anhand von Algorithmen zur Bestimmung des Ladungszustands der Batterie (State-of-Charge) getätigt. Dabei werden auch Randparameter, wie Temperatur und Haltbarkeits-Zustand der Batterie (Sate-of-Health) mit einbezogen.

Der Eigenverbrauch eines Batteriesystems setzt sich aus den Eigenentladungen der die Batterie bildenden Batteriezellen, die sehr gering sind, und dem Eigenverbrauch der Batterieelektronik, die dominant ist, zusammen. Für einen sicheren Betrieb muss der Eigenverbrauch der Batterieelektronik durch geeignete Maßnahmen (z.B. Sleep Modi) reduziert werden. Jedoch muss bei Unterschreitung eines definierten Schwellwertes des Ladungszustands der Batteriezellen die Batterieelektronik zum Schutz des Batteriesystems komplett von den Batteriezellen getrennt werden.

Nach einer solchen vollständigen Trennung der Batterieelektronik von den Batteriezellen ist eine anschließende Aktivierung des Batteriesystems nicht ohne weiteres mehr möglich, da die Batterieelektronik keine Energieversorgung mehr besitzt und somit eine Zuschaltung nicht mehr möglich ist.

Üblicherweise wird in solchen Fällen zur kurzfristigen Versorgung der Batterieelektronik eine Hilfsspannungsversorgung an einen zusätzlichen externen Hilfsenergieanschluss der Batterieelektronik bzw. des Batteriesystems angeschlossen.

Der vorliegenden Erfindung liegt die Aufgabe zugrunde, ein Verfahren der eingangs genannten Art so auszugestalten, dass ein Einschalten des Batteriesystems ohne einen zusätzlichen Hilfsenergieanschluss der Batterieelektronik bzw. des Batteriesystems ermöglicht wird.

Diese Aufgabe wird verfahrensseitig erfindungsgemäß dadurch gelöst, dass zum Einschalten des Batteriesystems die Batterieelektronik über den Kommunikationsanschluss mindestens solange mit elektrischer Energie versorgt wird, bis die Batterieelektronik aktiviert ist.

Entgegen üblicher Methoden zur kurzfristigen Versorgung der Batterieelektronik durch einen zusätzlichen externen Hilfsenergieanschluss mit zugehöriger externer Energieversorgungsquelle wird erfindungsgemäß der ohnehin vorhandene Kommunikationsanschluss des Batteriesystems zur Energieversorgung der Batterieelektronik genutzt, um die Batterieelektronik wieder freizuschalten und zu aktivieren.

Die Verwendung eines Kommunikationsanschlusses zur Steuerung verschiedener Betriebszustände des Batteriesystems ist an sich z.B. aus der EP 2 517 922 A2 bekannt. Dabei erfolgt allerdings lediglich ein Datenaustausch zwischen dem Batteriesystem und der Steuerungseinrichtung. Es geht nicht um eine für die Aktivierung der Batterieelektronik ausreichende Energieversorgung der Batterieelektronik über den Kommunikationsanschluss.

Gemäß einer bevorzugten Ausgestaltung der Erfindung wird für die Energieversorgung der Batterieelektronik ein für die Kommunikationsverbindung zwischen der Batterieelektronik und der Steuerungseinrichtung vorgesehener Bus-Anschluss verwendet. Ein Bus ist ein System zur Datenübertragung zwischen mehreren Teilnehmern über einen gemeinsamen Übertragungsweg. Dabei kann es sich um ein serielles Bussystem, insbesondere um einen CAN-Bus (Controller Area Network) oder einen LIN-Bus (Local Interconnect Network) oder um einen RS485-Bus handeln.

Die Energie der Bus-Kommunikation wird genutzt, um die Batterieelektronik wieder frei zuschalten. Dabei wird dem Batteriesystem eine spezielle Nachricht bzw. ein spezielles Signal übermittelt, bei welcher nicht der eigentliche Inhalt der Nachricht bzw. des Signals entscheidend ist, sondern vielmehr die übertragene Energie ausschlaggebend ist. Die Steuerungseinrichtung sendet also zum Einschalten des Batteriesystems über den Kommunikationsanschluss ein Signal, mit dem die erforderliche Energie zur Aktivierung der Batterieelektronik übertragen wird. Sobald eine definierte Energieschwelle überschritten ist, kann die Batterieelektronik wieder aktiviert werden.

Das erfindungsgemäße Verfahren ermöglicht somit ein Wiedereinschalten eines Batteriesystems mit Batterieelektronik, wobei die Hilfsenergieversorgung zum Freischalten bzw. Aktivieren der Batterieelektronik über den bereits vorhandenen Kommunikationsanschluss und die Bus-Kommunikation erfolgt.

Mit besonderem Vorteil kommt diese Methode der Aktivierung der Batterieelektronik bei einem Betriebszustand des Batteriesystems zum Einsatz, bei dem die Energieversorgung der Batterieelektronik bei Entladung der Batterie unter einen vorgegebenen Ladezustand getrennt wird. Nach Aktivierung der Batterieelektronik kann dann der Leistungsanschluss für das Laden der Batterie mittels der Ladeeinrichtung freigeschaltet werden. Somit kann die Batterie wieder in herkömmlicher Weise geladen werden.

Die Methode der Aktivierung der Batterieelektronik kann aber auch bei einem Betriebszustand eingesetzt werden, bei dem die Energieversorgung der Batterieelektronik für einen Transportmodus getrennt wird. Um einen sicheren Transport von modernen Batteriesystemen zu ermöglichen, wird häufig ein Transportmodus gewählt, bei dem das Batteriesystem durch Trennung der Batterieelektronik von der Energieversorgung ausgeschaltet wird.

Nach Aktivierung der Batterieelektronik kann dann das Batteriesystem in einen Betriebsmodus wechseln.

In beiden Fällen wird, sobald eine definierte Energieschwelle überschritten ist und die Batterieelektronik wieder aktiviert wurde, bevorzugt ein spezieller Modus genutzt, bei welchem trotz Schutzmechanismen die Batterieelektronik für eine definierte Zeit aktiv bleibt und der Leistungspfad (Leistungsanschluss) für eine notwendige Ladung mittels der Ladeeinrichtung freigegeben wird oder die Batterie aus dem Transportmodus in den normalen Betriebsmodus wechselt.

Als Batterie wird vorzugsweise eine Lithium-Ionen-Batterie verwendet. Dabei kann es sich z.B. um einen Lithium-Cobaltdioxid-Akkumulator handeln, bei dem die positive Elektrode aus dem namensgebenden Lithium-Cobalt(III)-oxid (LiCoO2) besteht. Es kann aber auch ein Lithiumtitanat-Akkumulator eingesetzt werden, bei dem die herkömmliche Graphitelektrode (negativer Pol) durch eine gesinterte Elektrode aus Lithiumtitanspinell (Li4Ti5O12) ersetzt ist. Mit Vorteil kann auch ein Lithium-Polymer-Akkumulator verwendet werden. Die wesentliche Eigenschaft des Polymer-Akkumulators ist die Art der Gestaltung des normalerweise flüssigen Elektrolyts, welcher als feste bis gelartige Folie auf Polymerbasis vorliegt. In Betracht kommen auch Lithium-Mangan-Akkumulatoren, Lithium-Eisenphosphat-Akkumulatoren oder Lithium-Luft-Akkumulatoren.

Mit besonderem Vorteil wird als Batteriesystem das Batteriesystem eines elektrisch betriebenen Fahrzeugs verwendet. Dabei kann es sich um alle batterieelektrisch angetriebenen Fahrzeuge mit einer Traktionsbatterie oder auch um Hybridfahrzeuge mit einem Hybridantrieb handeln, bei denen ein verbrennungsmotorischer und ein batterieelektrischer Antrieb zusammengeschaltet sind.

Ganz besonders bevorzugt wird als Batteriesystem das Batteriesystem eines elektrisch betriebenen Fahrzeugs, insbesondere eines Flurförderzeugs, verwendet. Dabei kann es sich ebenfalls um rein batterieelektrisch angetriebene Fahrzeuge oder um solche mit Hybridantrieb handeln.

Dabei wird vorteilhafterweise als Steuerungseinrichtung eine Fahrzeugsteuerung verwendet. Die Fahrzeugsteuerung des elektrisch betriebenen Fahrzeugs oder des elektrisch betriebenen Flurförderzeugs steht üblicherweise ohnehin über den Kommunikationsanschluss mit der Batterieelektronik des Batteriesystems in Verbindung, um Daten mit der Batterieelektronik auszutauschen. Diese Kommunikationsverbindung kann idealerweise genutzt werden, um die Batterieelektronik mit elektrischer Energie zu versorgen, wenn die Batterieelektronik beispielsweise aufgrund einer automatischen Unterspannungsabschaltung nicht mehr von der Batterie gespeist wird. Auf diese Weise kann die Batterieelektronik von der Fahrzeugsteuerung durch Übertragung elektrischer Energie über die Kommunikationsverbindung wieder aktiviert werden.

Neben dem Verfahren betrifft die Erfindung ferner ein Steuerungssystem zur Durchführung des Verfahrens mit einem mit mindestens einer Batterie und mindestens einer Batterieelektronik ausgestatteten Batteriesystem mit mindestens einem Leistungsanschluss sowie mindestens einem Kommunikationsanschluss, der mit einer außerhalb des Batteriesystems vorgesehenen Steuerungseinrichtung verbunden ist.

Bei dem Steuerungssystem wird die gestellte Aufgabe dadurch gelöst, dass die Steuerungseinrichtung dazu eingerichtet ist, die Batterieelektronik über den Kommunikationsanschluss mindestens solange mit elektrischer Energie zu versorgen, bis die Batterieelektronik aktiviert ist.

Außerdem betrifft die Erfindung ein batterie-elektrisch betriebenes Fahrzeug, insbesondere Flurförderzeug, mit einem mit mindestens einer Batterie und mindestens einer Batterieelektronik ausgestatteten Batteriesystem und einer Fahrzeugsteuerung.

Bei dem Fahrzeug, insbesondere einem Flurförderzeug, wird die gestellte Aufgabe dadurch gelöst, dass die Fahrzeugsteuerung ein Steuerungssystem mit einem mit mindestens einer Batterie und mindestens einer Batterieelektronik ausgestatteten Batteriesystem mit mindestens einem Leistungsanschluss sowie mindestens einem Kommunikationsanschluss, der mit einer außerhalb des Batteriesystems vorgesehenen Steuerungseinrichtung verbunden ist, umfasst, und die Steuerungseinrichtung dazu eingerichtet ist, die Batterieelektronik über den Kommunikationsanschluss mindestens solange mit elektrischer Energie zu versorgen, bis die Batterieelektronik aktiviert ist. Die Erfindung ist für alle Batteriesysteme mit integrierten und externen Elektroniken anwendbar, welche einen Eigenenergiebedarf besitzen. Es können neben mobilen auch stationäre Energiespeichersysteme damit ausgerüstet werden. Besonders für Transport und Lagerung des Batteriesystems kann die Erfindung sinnvoll sein. Auch bei langen Stillstandszeiten kann die Erfindung angewandt werden.

Dabei bietet die Erfindung eine ganze Reihe von Vorteilen:
Es werden keine zusätzlichen internen oder externen Energiequellen für das Wiedereinschalten des Batteriesystems benötigt. Ein undefiniertes Laden über Nebenbatterieanschlüsse ist unterbunden. Außerdem werden keine zusätzlichen Stecksysteme oder Steckerpins für das Wiedereinschalten benötigt. Es besteht eine sehr lange Wiedereinschaltmöglichkeit durch ein Standard-Verfahren, ohne dass besondere Fachausbildungen (Servicetechniker) für die Reaktivierung des Batteriesystems notwendig sind. Auch bei längeren Überführungen oder Lagerungen von Batteriesystemen kann das Batteriesystem direkt mit der zugehörigen Ladeeinrichtung oder einer anders gearteten Aktivierungseinrichtung aktiviert werden (Transportmodus und Lagermodus). Ferner werden die Sicherheitsanforderungen an das Batteriesystem durch die erfindungsgemäße Versorgungsvariante nicht negativ beeinflusst. Die galvanische Trennung zwischen Bussystem und Batteriespannung bleibt bestehen. Darüber hinaus wird der Missbrauchsschutz für das Batteriesystem bzw. das ganze Fahrzeug erhöht, da auch bei normalem Batteriespannungsniveau der Modus zum Wiedereinschalten des Batteriesystems genutzt werden kann. Insgesamt wird ein energieeffizientes Unterspannungsschutzsystem zur Verfügung gestellt.

Weitere Vorteile und Einzelheiten der Erfindung werden anhand des in der schematischen Figur dargestellten Ausführungsbeispiels näher erläutert. Hierbei zeigt die
- Figur: ein Blockdiagramm eines erfindungsgemäßen Batteriesystems

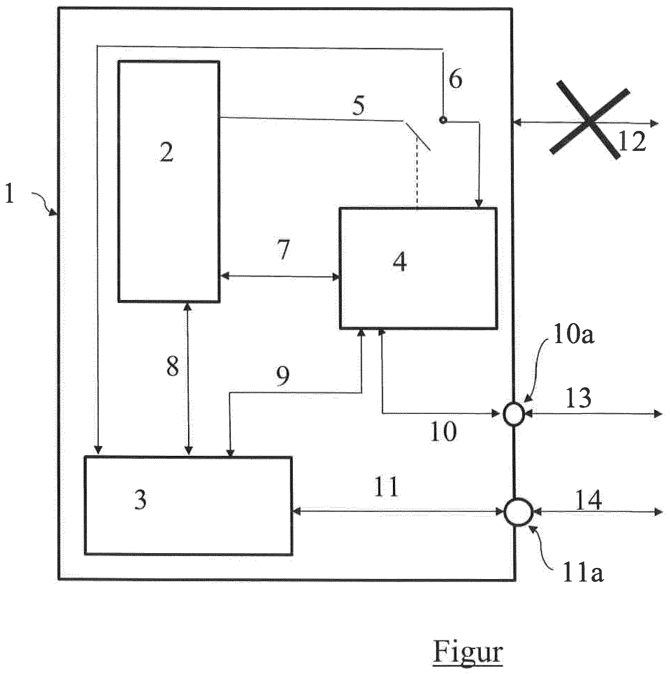

In der Figur ist ein erfindungsgemäßes Batteriesystem 1 eines batterie-elektrisch betriebenen Fahrzeugs, beispielsweise eines Flurförderzeugs, dargestellt. Die Batterie 2 des Batteriesystems 1 ist als Lithium-Ionen-Batterie mit mehreren Batteriezellen ausgebildet. Die Batteriezellen können in Serien und/oder Parallelverbung verschaltet sein. Die Batterie 2 ist über einen Leistungspfad 8 mit einer Regelungseinheit 3 verbunden, die Schutz- und Trennsysteme sowie eine Messtechnik umfasst. Die Regelungseinheit 3 ist über einen weiteren Leistungspfad 11 und entsprechende Leistungsanschlüsse 11a mit externen Leistungsanschlüssen 14 verbunden. Die Leistungsanschlüsse 11a, 14 können mit dem elektrischen Antrieb des Fahrzeugs, beispielsweise eines Flurförderzeugs, verbunden werden. Alternativ können die Leistungsanschlüsse 11a, 14 mit einem Ladegerät verbunden werden, um die Batterie 2 aufzuladen. Die Batterie 2 ist andererseits über eine interne Versorgungsleitung 5 mit einer Batterieelektronik 4 verbunden über die die Batterieelektronik 4 von der Batterie 2 mit elektrischer Energie versorgt wird. Die Batterieelektronik 4 überwacht über eine Leitung 7 die Batterie 2 und dient zum Schutz gegen Tiefentladung, Überladung und thermische Überlastung. Außerdem gleicht die Batterieelektronik 4 durch so genanntes "Cell-Balancing" den Ladezustand aller Batteriezellen der Batterie 2 aneinander an. Die Batterieelektronik 4 steht ferner über eine interne Kommunikationsleitung 9 mit der Regelungseinheit 3 in Verbindung. Über eine weitere Kommunikationsleitung 10 und einen Kommunikationsanschluss 10a ist die Batterieelektronik 4 mit einer externen Kommunikationsverbindung 13 verbunden. An die externe Kommunikationsverbindung 13 ist eine in eine Fahrzeugsteuerung des Fahrzeugs integrierte Steuerungseinrichtung für die externe Steuerung des Batteriesystems 1 angeschlossen. Die Kommunikationsverbindung 13 ist bevorzugt als Bus-Verbindung, beispielsweise CAN-Bus, LIN-Bus, RS485, ausgebildet.

Wird ein vorgegebener Betriebszustand erreicht, bei dem die elektrische Spannung der Batterie 2 unter ein bestimmtes Niveau fällt, wird durch die Regelungseinheit 3 ein Unterspannungsschutz eingeleitet, um die Batterie 2 vor einer schädlichen Tiefentladung zu schützen. Hierzu wird über eine interne Schaltleitung 6 die interne Versorgungsleitung 5 von der Batterieelektronik 4 getrennt, so dass die Batterieelektronik 4 deaktiviert wird.

Nach einer solchen vollständigen Trennung der Batterieelektronik 4 von der Batterie 2 ist eine anschließende Aktivierung des Batteriesystems 1 nicht ohne weiteres mehr möglich, da die Batterieelektronik 4 keine Energieversorgung mehr besitzt und somit eine Zuschaltung nicht mehr möglich ist.

Üblicherweise wird im Stand der Technik in solchen Fällen zur kurzfristigen Versorgung der Batterieelektronik 4 eine externe Hilfsspannungsversorgung 12 an einen zusätzlichen Hilfsenergieanschluss der Batterieelektronik 4 bzw. des Batteriesystems 1 angeschlossen.

Mit der Erfindung kann auf einen solchen Hilfsenergieanschluss verzichtet werden.

Stattdessen wird erfindungsgemäß der ohnehin vorhandene Kommunikationsanschluss 10a des Batteriesystems 1 und die Kommunikationsverbindung 13 zur Energieversorgung der Batterieelektronik 4 genutzt.

Zum Einschalten des Batteriesystems 1 sendet die in die Fahrzeugsteuerung integrierte Steuerungseinrichtung über die Kommunikationsverbindung 13 und den Kommunikationsanschluss 10a ein Signal bzw. eine Nachricht, mit dem die erforderliche Energie zur Aktivierung der Batterieelektronik 4 übertragen wird. Sobald eine definierte Energieschwelle überschritten ist, kann die Batterieelektronik 4 wieder aktiviert werden. Dabei wird ein spezieller Modus genutzt, bei welchem trotz Schutzmechanismen die Batterieelektronik 4 für eine definierte Zeit aktiv bleibt und die Leistungspfade 11 und 8 der Batterie 2 für eine Ladung der Batterie 2 mittels der an die Leistungsanschlüsse 11a und die externen Leistungsanschlüsse 14 angeschlossenen Ladeeinrichtung freigegeben werden.

## Patentansprüche

1. Verfahren zum Steuern eines mit mindestens einer Batterie und mindestens einer Batterieelektronik ausgestatteten Batteriesystems mit mindestens einem Leistungsanschluss, über den mindestens ein elektrischer Verbraucher mit elektrischer Energie aus der Batterie versorgt werden kann und/oder über den die Batterie mittels einer Ladeeinrichtung geladen werden kann, sowie mit mindestens einem Kommunikationsanschluss, über den eine Kommunikationsverbindung zwischen der Batterieelektronik und einer außerhalb des Batteriesystems vorgesehenen Steuerungseinrichtung hergestellt werden kann, wobei die Batterieelektronik mit elektrischer Energie aus der Batterie versorgt wird, und bei vorgegebenen Betriebszuständen die Energieversorgung der Batterieelektronik getrennt und die Batterieelektronik deaktiviert wird, wodurch das Batteriesystem ausgeschaltet wird, **dadurch gekennzeichnet, dass** zum Einschalten des Batteriesystems (1) die Batterieelektronik (4) über den Kommunikationsanschluss (10a) mindestens solange mit elektrischer Energie versorgt wird, bis die Batterieelektronik (4) aktiviert ist.

2. Verfahren nach Anspruch 1, **dadurch gekennzeichnet, dass** die Energieversorgung der Batterieelektronik (4) bei Entladung der Batterie (2) unter einen vorgegebenen Ladezustand getrennt wird.

3. Verfahren nach Anspruch 1 oder 2, **dadurch gekennzeichnet, dass** die Energieversorgung der Batterieelektronik (4) in einem Transportmodus getrennt wird.

4. Verfahren nach einem der Ansprüche 1 bis 3, **dadurch gekennzeichnet, dass** nach Aktivierung der Batterieelektronik (4) der Leistungsanschluss (11a) für das Laden der Batterie (2) mittels der Ladeeinrichtung freigegeben wird.

5. Verfahren nach einem der Ansprüche 1 bis 4, **dadurch gekennzeichnet, dass** nach Aktivierung der Batterieelektronik (4) das Batteriesystem (1) in einen Betriebsmodus versetzt wird.

6. Verfahren nach einem der Ansprüche 1 bis 5, **dadurch gekennzeichnet, dass** die Steuerungseinrichtung zum Einschalten des Batteriesystems (1) über den Kommunikationsanschluss (10a) ein Signal an die Batterieelektronik (4) sendet, mit dem die erforderliche elektrische Energie zur Aktivierung der Batterieelektronik (4) übertragen wird.

7. Verfahren nach einem der Anschlüsse 1 bis 6, **dadurch gekennzeichnet, dass** als Kommunikationsanschluss (10a) ein Bus-Anschluss verwendet wird.

8. Verfahren nach einem der Ansprüche 1 bis 7, **dadurch gekennzeichnet, dass** als Batterie (2) eine Lithium-Ionen-Batterie verwendet wird.

9. Verfahren nach einem der Ansprüche 1 bis 8, **dadurch gekennzeichnet, dass** das Batteriesystem (1) als Batteriesystem (1) eines elektrisch betriebenen Fahrzeugs verwendet wird.

10. Verfahren nach einem der Ansprüche 1 bis 9, **dadurch gekennzeichnet, dass** das Batteriesystem (1) als Batteriesystem (1) eines elektrisch betriebenen Fahrzeugs, insbesondere eines Flurförderzeugs, verwendet wird.

11. Verfahren nach Anspruch 9 oder 10, **dadurch gekennzeichnet, dass** als Steuerungseinrichtung eine Fahrzeugsteuerung verwendet wird.

12. Steuerungssystem zur Durchführung eines Verfahrens nach einem der Ansprüche 1 bis 11 mit einem mit mindestens einer Batterie und mindestens einer Batterieelektronik ausgestatteten Batteriesystem mit mindestens einem Leistungsanschluss sowie mindestens einem Kommunikationsanschluss, der mit einer außerhalb des Batteriesystems vorgesehenen Steuerungseinrichtung verbunden ist, **dadurch gekennzeichnet, dass** die Steuerungseinrichtung dazu eingerichtet ist, die Batterieelektronik (4) über den Kommunikationsanschluss (10a) mindestens solange mit elektrischer Energie zu versorgen, bis die Batterieelektronik (4) aktiviert ist.

13. Elektrisch betriebenes Fahrzeug, insbesondere Flurförderzeug, mit einem mit mindestens einer Batterie und mindestens einer Batterieelektronik ausgestatteten Batteriesystem und einer Fahrzeugsteuerung, **dadurch gekennzeichnet, dass** die Fahrzeugsteuerung ein Steuerungssystem nach Anspruch 12 umfasst.
